# EUROPÄISCHE PATENTSCHRIFT

(11) **EP 1 456 024 B1**
(45) Veröffentlichungstag und Bekanntmachung des Hinweises auf die Patenterteilung: **26.04.2006**
(21) Anmeldenummer: 02795168.0
(22) Anmeldetag: 12.12.2002
(51) Int. Cl.: B32B 25/16, B60R 13/02

(54) **FLÄCHENVERSTEIFENDE KAUTSCHUK-SYSTEME**
RUBBER SYSTEMS FOR REINFORCING SURFACES
SYSTEMES CAOUTCHOUTEUX POUR LE RENFORCEMENT DE SURFACES

(30) Priorität: 21.12.2001 DE 10163252
(43) Veröffentlichungstag der Anmeldung: 15.09.2004
(73) Patentinhaber: Henkel KGaA, 40589 Düsseldorf (DE)
(72) Erfinder: SAUER, Ralf, 68789 St Leon-Rot (DE); HORNUNG, Martin, 69121 Heidelberg (DE); CADOU, Severine, 58200 Cosne-sur-Loire (FR); DEVIPPS, Laurence, F-64000 Pau (FR)
(74) Vertreter: Scheffler, Ingolf
(86) Internationale Anmeldenummer: PCT/EP2002/014121
(87) Internationale Veröffentlichungsnummer: WO 2003/053687

(56) Entgegenhaltungen:
- EP-A- 0 376 880
- EP-A- 0 759 354
- EP-A- 0 805 841
- DE-C- 3 834 818
- US-A- 5 470 886

## Beschreibung

Die Erfindung betrifft hitzehärtbare, mehrschichtige flächige Formkörper enthaltend mindestens eine hitzehärtbare Bindemittelschicht und mindestens eine Schicht eines Verstärkungsmittels, ein Verfahren zu deren Herstellung, ihre Verwendung sowie ein Verfahren zum Versteifen und / oder Verstärken von flächigen Karosseriebauteilen.

Ausgelöst durch verbesserten Korrosionsschutz für metallische Substrate, leichtere Formbarkeit dieser dünnen Substrate sowie niedrigere Kosten und insbesondere wegen der Gewichtserspamis und der damit verbundenen Ersparnis an Treibstoffen im Betrieb derartiger Fahrzeuge in Leichtbauweise, hat die Verwendung von dünnen Streifen, Platten oder Blechen im Fahrzeugbau in der jüngsten Zeit stark zugenommen. In der Vergangenheit wurden zur Versteifung entweder metallische Versteifungsplatten auf die dünnen Bleche aufgeschweißt oder aufgeklebt. Wegen des vorgenannten Erfordernis der Gewichtsersparnis ist die Nachfrage nach leichten flächen- und rahmenversteifenden Systemen für verschiedenste Anwendungen im Automobilbau sehr groß. Bisher sind für diese Anwendungsfelder neben den vorgenannten Metallplatten Schichtkörpersysteme auf der Basis von Epoxidharzen und / oder Polyurethanen bekannt geworden.

So beschreibt die US-A-4444818 einen thermisch härtbare Klebstoffschichtkörper, der aus einer wärmehärtbaren Harzschicht in Form eines "Prepregs" aufgebaut ist, in dem ein verstärkendes Material eingebettet ist. Weiterhin schlägt diese Schrift vor, ein flachgedrücktes röhrenförmiges Material auf einer Seite des Prepregs anzubringen, das beim Erwärmen des verstärkenden Schichtkörpers seine ursprüngliche röhrenförmige Form wieder annehmen kann. Der Prepreg-Schichtkörper kann aus zwei unterschiedlichen, thermisch härtbaren Harzschichten bestehen. Als Bindemittel für die thermisch härtbaren Schichten des Prepregs werden Epoxidharze vorgeschlagen. Der röhrenförmige oder schlauchartige Körper soll dabei aus Polyethylen, Ethylenvinylacetatcopolymeren, Polypropylen, Polystyrol oder PVC oder auch Nitrilkautschuk bestehen. Das Herstellverfahren für derartige verstärkende Schichtkörper ist aufwendig.

Die EP-A-230666 beschreibt ein Verfahren zur Herstellung einer einkomponentigen hitzehärtbaren Zusammensetzung, welche beim Erhitzen ein Urethan-Epoxy-Silicon Interpenetrating Network (IPN) System bildet. Diese Schrift schlägt vor, aus diesen Zusammensetzungen metallverstärkende Schichtkörper ("Patches") herzustellen, die direkt auf ölhaltigen Metalloberflächen wie öligen Stahlblechen haftet. Das IPN soll dabei durch eine Polyepoxyverbindung, ein blockiertes Polyaminhärtungsagenz, und ein Kettenverlängertes Polyurethanprepolymer, bei dem einige Isocyanatgruppen des Prepolymers mit einem hydroxyfunktionellen Polysiloxan blockiert sind, gebildet werden

EP-A-297036 beschreibt einen Schichtkörper bestehend aus einem Träger, z.B. harzgebundenen Glasfasergewebe auf das eine Schicht aus wärmehärtendem Harz aufgebracht ist. Um die klebrige Harzoberfläche zu schützen, ist eine Abdeckfolie aus einem bei Wärmeeinwirkung schrumpfenden Material vorgesehen. Diese Folie soll mit Schlitzen versehen sein, die sich nach einer Wärmevorbehandlung zum Öffnen erweitern, so daß ein Teil der klebrigen Oberfläche frei liegt. Damit soll es nicht mehr notwendig sein, vor dem Anbringen des Schichtkörpers die Schutzfolie abzuziehen. Ober die Zusammensetzung der klebrigen Harzschicht werden keine Angaben gemacht.

EP-A-376880 beschreibt eine Schichtkörperanordnung zur Versteifung von flächigen Körpern umfassend eine Trägerschicht aus einem aushärtbaren Kunstharzmaterial in dem ein damit verbundenes oder darin eingebettetes Verstärkungsmaterial vorgesehen ist. Weiterhin ist eine auf der Trägerschicht aufgebrachte, dem zu versteifenden Körper zugewandte, Klebstoffschicht vorgesehen, die ein ggf. mit Füllstoffen und sonstigen Additiven versehenes härtbares Kunstharzmaterial umfaßt. Um einen möglichst hohen Verstärkungseffekt ohne Deformation des flächigen Körpers (Blechs) zu erreichen, soll die Klebstoffschicht nach der Härtung des Kunstharzes einen höheren Elastizitätsmodul als das gehärtete Kunstharzmaterial der Trägerschicht besitzen, gleichzeitig sollen Trägerschicht und Klebstoffschicht im ausgehärteten Zustand zumindest annähernd die gleiche Wärmedehnzahl wie der zu versteifende flächige Körper aufweisen. Die Trägerschicht soll dabei aus einem Glasfasergewebe und einem Gemisch aus flüssigen Epoxidharzen und festen Epoxidharzen sowie Härtern bestehen, die Klebstoffschicht soll im Wesentlichen aus wärmehärtenden, selbsthaftenden Kunstharzen bestehen, die ebenfalls aus flüssigen und festen Epoxidharzen sowie Härtern und Füllstoffen aufgebaut ist.

In ähnlicher Weise beschreibt die EP-A-298024 ein Verfahren zum Versteifen von Blechen und Kunststoff-Formkörpern mit Hilfe eines ein- oder mehrschichtigen flächigen Versteifungskörpers, bei dem zumindest eine Schicht aus einer unter Wärmeeinfluß härtenden Kunstharz aufweist Dieser Versteifungskörper soll dabei zunächst einer ersten Wärmebehandlung unterworfen werden, bei der mindestens eine Oberfläche des Versteifungskörpers durch diese erste Wärmebehandlung klebrig wird. Anschließend soll der Versteifungskörper mit der klebrigen Oberfläche auf das zu versteifende Element aufgebracht werden und anschließend soll der Versteifungskörper einer zweiten Wärmebehandlung unterworfen werden, bis alle Schichten des Versteifungskörpers ausgehärtet sind. Es wird vorgeschlagen, daß eine Schicht des Verstärkungskörpers aus hitzehärtenden Epoxidharzen aufgebaut ist, die ggf. Glasfasergewebe enthält. Als zweite Schicht, die bei der ersten Wärmebehandlung klebrig werden soll, wird ein Schmelzkleber auf Epoxidbasis, eventuell auf Polyurethan- oder Copolyesterbasis vorgeschlagen. Alternativ soll diese Schicht aus einer unter Wärmewirkung schrumpfenden Folie bestehen, so daß nach Schrumpfung eine klebrige Schicht freigelegt wird.

Die WO 95/27000 beschreibt eine härtbare, spritzbare Zusammensetzung zur Verstärkung von dünnen, harten Blechen oder Platten. Die Zusammensetzung ist aufgebaut, aus wärmehärtbaren Harzen, expandierbaren Mikrohohlkugeln und teilchenförmigen Verstärkungsmaterial aus gemahlenen Glasfasern, gemahlenen Kohlefasern und deren Mischungen. Als hitzehärtbare Harz-Zusammensetzungen werden die verschiedenen Epoxidharze auf der Basis von Glycidylethem, Glycidylestern, Glycidylaminen vorgeschlagen.

Die CA-A-2241073 beschreibt ein folienverstärkendes Versteifungslaminat für steife, dünnwandige Substrate. Gemäß der Lehre dieser Schrift soll das Polymer in einem Lackofen unter Expansion aushärten und sich dabei innig mit der inneren Oberfläche des zu verstärkenden Basissubstrates verbinden. Angaben über die Bindemittel-Zusammensetzung werden in dieser Schrift nicht gemacht.

Wir aus dem vorstehend geschilderten Stand der Technik hervorgeht, beschränken sich die flächen- oder rahmenversteifenden Schichtkörper im Wesentlichen auf epoxybasierten Systemen und Systemen auf der Basis von Polyurethanen. Diese bewirken zwar in der Regel die geforderte Versteifungsleistung, erfüllen aber nicht den Wunsch nach einer arbeitshygienischen und gesundheitlich unbedenklichen chemischen Basis. Epoxysysteme auf der Basis von flüssigen Epoxidharzen enthalten bekanntermaßen niedermolekulare Epoxyverbindungen mit einem Molekulargewicht unter 700. Der Einsatz derartiger Epoxyzusammensetzungen ist aus arbeitshygienischen Gründen unerwünscht, da diese niedermolekularen Epoxyverbindungen bei Hautkontakt allergische bzw. sensibilisierende Reaktionen auslösen können. Reaktive Polyurethansysteme enthalten in aller Regel noch Reste an monomeren Diisocyanaten. Aus diesem Grunde müssen die Arbeitsplätze bei Verwendung derartiger Zusammensetzungen entsprechend mit Absaugeinrichtungen eingerichtet sein, um die an diesen Arbeitsplätzen eingesetzten Personen vor der Exposition von Isocyanaten schützen zu können.
Angesichts dieses Standes der Technik haben sich die Erfinder die Aufgabe gestellt, flächenversteifende, hitzehärtbare Formkörper bereitzustellen, die frei von niedermolekularen Epoxyverbindungen und frei von Isocyanaten sind.

Die erfindungsgemäße Lösung der Aufgabe ist den Patentansprüchen zu entnehmen. Sie besteht im Wesentlichen in der Bereitstellung mehrschichtiger, flächiger Formkörper- -aufgebaut aus mindestens einer hitzehärtbaren Bindemittelschicht und mindestens einer Schicht von Verstärkungsmitteln, wobei die Bindemittelschicht natürliche und / oder synthetische, olefinische Doppelbindungen enthaltende Kautschuke und Vulkanisationsmittel enthält.

Ein weiterer Gegenstand der vorliegenden Erfindung ist ein Verfahren zum Versteifen oder zum Verstärken von flächigen Bauteilen aus Metall oder Kunststoff das die folgenden wesentlichen Verfahrensschritte beinhaltet:
a) Aufbringen der hitzehärtbaren Bindemittelschicht auf der Basis von natürlichen und / oder synthetischen, olefinische Doppelbindungen enthaltenden Kautschuke und Vulkanisationsmittel auf das Verstärkungsmittel.
b) Ggf. Aufbringen einer Schutzfolie auf der Bindemittelschicht, wenn diese bei Raum- und Lagertemperatur klebrig ist.

Die so hergestellten Formkörper können ggf. zwischengelagert werden oder zum Endanwender, in der Regel dem Automobilhersteller, transportiert werden. Dort wird die ggf. vorhandene Schutzfolie von der Bindemittelschicht entfernt, anschließend wird der Formkörper auf das zu verstärkende oder zu versteifende Bauteil aufgebracht und die Aushärtung des Bindemittels erfolgt bei Temperaturen zwischen 110 °C und 210 °C, vorzugsweise zwischen 130 °C und 180 °C in den Lacktrockenöfen, in der Regel in dem Ofen zur Aushärtung der Elektrotauchlackbeschichtung.

Die erfindungsgemäß verwendeten reaktiven, hitzehärtbaren BindemittelZusammensetzungen enthalten
- einen oder mehrere Flüssigkautschuke und/oder Festkautschuke oder Elastomere,
- Vulkanisationsmittel, Vulkanisationsbeschleuniger, Katalysatoren,
- Füllstoffe,
- ggf. Klebrigmacher und/oder Haftvermittler,
- ggf. Treibmittel,
- ggf. Extenderöle;
- ggf. Alterungsschutzmittel,
- ggf. Rheologiehilfsmittel.

Die Flüssigkautschuke oder Elastomere enthalten dabei pro Molekül mindestens eine olefinisch ungesättigte Doppelbindung. Sie können dabei aus der folgenden Gruppe der Homo- und/oder Copolymeren ausgewählt werden: Polybutadiene, insbesondere die 1,4- und 1,2-Poly-butadiene, Polybutene, Polyisobutylene, 1,4-und 3,4-Polyisoprene, Styrol-Butadien-Copolymere, Butadien-Acrylnitril-Copolymere, Ethylen-Propylen-Dien-Kautschuk (EPDM), wobei eines oder mehrere dieser Polymeren endständige und/oder (statistisch verteilte) seitenständige funktionelle Gruppen haben können. Beispiele für derartige funktionelle Gruppen sind Hydroxy-, Amino-, Mercapto-, Carboxyl-, Carbonsäureanhydrid- oder Epoxygruppen. Das Molekulargewicht dieser Flüssigkautschuke ist typischerweise unterhalb von 40000, vorzugsweise zwischen 900 und 10000. Der Anteil an Flüssigkautschuk an der Gesamtzusammensetzung hängt dabei von der gewünschten Rheologie der ungehärteten Zusammensetzung und der erwünschten mechanischen Steifigkeit des Schichtkörpers und der erforderlichen Versteifungs- oder Verstärkungswirkung des ausgehärteten Schichtkörper Substrat-Verbundes ab. Der Anteil an flüssigem Kautschuk bzw. Elastomer variiert normalerweise zwischen 5 und 50 Gew.% der Gesamtformulierung. Dabei hat es sich als zweckmäßig erwiesen, Mischungen von Flüssigkautschuken unterschiedlicher Molekulargewichte und unterschiedlicher Konfiguration in bezug auf die restlichen Doppelbindungen einzusetzen. Zur Erzielung optimaler Haftung auf den diversen Substraten wird in den besonders bevorzugten Formulierungen anteilig eine Flüssigkautschukkomponente mit Hydroxylgruppen, Carboxylgruppen bzw. Säureanhydridgruppen eingesetzt. Mindestens einer der Flüssigkautschuke sollte einen hohen Anteil an cis-1,4-Doppelbindungen, ein weiterer einen hohen Anteil an Vinyldoppelbindungen enthalten.

Geeignete Festkautschuke haben im Vergleich zu den Flüssigkautschuken ein signifikant höheres Molekulargewicht (MW = 100 000 oder höher), Beispiele für geeignete Festkautschuke sind Polybutadien, vorzugsweise mit einem sehr hohen Anteil an cis-1,4-Doppelbindungen (typischerweise über 95%), Styrol-Butadien-Kautschuk, Butadien-Acrylnitril-Kautschuk, EPDM, synthetischer oder natürlicher Isoprenkautschuk, Butylkautschuk oder Polyurethankautschuk. Der Anteil an Festkautschuk kann 3 bis 20 Gew.%, vorzugsweise 3 bis 10 Gew.% der gesamten Bindemittelzusammensetzung betragen.

Gegebenenfalls können die erfindungsgemäßen Zusammensetzungen noch fein verteilte thermoplastische Polymerpulver enthalten. Beispiele für geeignete thermoplastische Polymere sind Polypropylen, Polyethylen, thermoplastische Polyurethane, Methacrylatcopolymere, Styrolcopolymere, Polyvinylchlorid, Polyvinylacetal sowie insbesondere Polyvinylacetat und dessen Copolymere wie beispielsweise Ethylenvinylacetatcopolymere. Obwohl die Teilchengröße bzw. Teilchengrößenverteilung der Polymerpulver nicht besonders kritisch zu sein scheint, sollte die mittlere Teilchengröße unter 1mm, vorzugsweise unter 350µm liegen. Die Menge des ggf. zugesetzten thermoplastischen Polymerpulvers liegt zwischen 2 und 20 Gew.%, bevorzugt zwischen 2 und 10 Gew.%.

Die Vemetzungs- bzw. Härtungsreaktion der Kautschukzusammensetzung und das Aufschäumen haben einen entscheidenden Einfluß auf die flächenversteifende Wirkung des Schichtkörpers, daher muß das Vulkanisationssystem und die Treibmittelzusammensetzung besonders sorgfältig ausgewählt und abgestimmt werden. Für das Vulkanisationssystem eignen sich eine Vielzahl von Vulkanisationsmitteln in Kombination mit elementarem Schwefel, aber auch Vulkanisationssysteme ohne freien Schwefel. Zu letzteren zählen die Vulkanisationssysteme auf der Basis von Thiuramdisulfiden, organischen Peroxiden, polyfunktionellen Aminen, Chinonen, p-Benzochinondioxim, p-Nitrosobenzol und Dinitrosobenzol oder auch die Vernetzung mit (blockierten) Diisocyanaten. Ganz besonders bevorzugt sind jedoch Vulkanisationssysteme auf der Basis von elementarem Schwefel und organischen Vulkanisationsbeschleunigern sowie Zinkverbindungen. Der pulverförmige Schwefel wird dabei in Mengen von 1 bis 15 Gew.%, bezogen auf die Gesamtzusammensetzung eingesetzt, besonders bevorzugt werden Mengen zwischen 3 und 8% eingesetzt. Als organische Beschleuniger eignen sich Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger, beispielsweise Diphenylguanidin, ganz besonders bevorzugt wird Dibenzothiazyldisulfid (MBTS), alleine oder ggf. in Mischung mit anderen Beschleunigern wie z. B. Zinkdibenzyldithiocarbamat (ZBEC) . Diese organischen Beschleuniger werden in Mengen zwischen 0,1 und 10 Gew.% bezogen auf die Gesamtformulierung, bevorzugt zwischen 0,2 und 8 Gew.%, eingesetzt. Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 3 und 20 Gew.%, vorzugsweise zwischen 3 und 7 Gew.%. Zusätzlich können weitere typische Kautschuk-Vulkanisationshilfsmittel wie Fettsäuren (z.B. Stearinsäure) in der Formulierung vorhanden sein.

Zum Erzielen der Aufschäumung während des Härtungsvorganges können prinzipiell alle gängigen Treibmittel verwendet werden, Beispiele für organische Treibmittel sind Azoverbindungen, N-Nitrosoverbindungen, Sulfonylhydrazide oder Sulfonylsemicarbazide. Für die erfindungsgemäß zu verwendenden Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid), das Diphenylsulfon-3,3'-disulfohydrazid oder das Benzol-1,3-disulfohydrazid und aus der Klasse der Semicarbazide das p-Toluolsulfonylsemicarbazid genannt Besonders bevorzugt werden jedoch die expandierbaren Kunststoffmikrohohlkugeln auf der Basis von Polyvinylidenchloridcopolymeren oder Acrylnitril/(Meth)acrylat-Copolymeren, diese sind z.B. unter den Namen "Dualite" bzw. "Expancel" von den Firmen Pierce & Stevens bzw. Casco Nobel im Handel erhältlich. Die Treibmittel werden in Mengen zwischen 0,1 und 2 Gew.%, vorzugsweise zwischen 0,2 und 1,5 Gew.% eingesetzt.

Obwohl die erfindungsgemäßen Zusammensetzungen aufgrund des bevorzugten Gehaltes an Flüssigkautschuk mit funktionellen Gruppen in der Regel bereits eine sehr gute Haftung auf den zu versteifenden Substraten haben, können, falls erforderlich, Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxyharzen in geringen Mengen kann bei manchen Substraten die Haftung verbessern. Hierfür werden dann jedoch vorzugsweise die festen Epoxidharze mit einem Molekulargewicht von über 700 in fein gemahlener Form eingesetzt. Falls Klebrigmacher bzw. Haftvermittler eingesetzt werden, hängt deren Art und Menge von der Polymerzusammensetzung des Schichtkörpers sowie dem Substrat, auf welches dieser appliziert wird, ab. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.% verwendet.

Vorzugsweise sind die erfindungsgemäßen Zusammensetzungen frei von Weichmachern und Extenderölen. Es kann jedoch notwendig sein, die Rheologie der ungehärteten Zusammensetzung und/oder die mechanischen Eigenschaften der gehärteten Zusammensetzung durch Zugabe von sog. Extenderölen, d.h. aliphatischen, aromatischen oder naphtenischen Ölen zu beeinflussen. Vorzugsweise geschieht diese Beeinflussung zwar durch zweckmäßige Auswahl der niedrigmolekularen Flüssigkautschuke oder durch die Mitverwendung von niedermolekularen Polybutenen oder Polyisobutylenen. Falls Extenderöle eingesetzt werden, werden Mengen im Bereich zwischen 2 und 15 Gew.% verwendet.

Die Füllstoffe können aus einer Vielzahl von Materialien ausgewählt werden, insbesondere sind hier zu nennen Kreiden, natürliche, gemahlene oder synthetische, gefällte Calciumcarbonate, Calcium-Magnesiumcarbonate, Silikate, Schwerspat sowie Ruß. Es kann ggf. zweckmäßig sein, daß zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Ggf. können die erfindungsgemäßen Zusammensetzungen noch zwischen 1 und 20 Gew.% , vorzugsweise zwischen 1,5 und 5 Gew.% an Calciumoxid enthalten. Der Gesamtanteil an Füllstoffen in der Formulierung kann zwischen 10 und 70 Gew.% variieren, der Vorzugsbereich liegt zwischen 25 und 60 Gew.%.

Gegen den thermischen, thermooxidativen oder Ozon - Abbau der erfindungsgemäßen Zusammensetzungen können konventionelle Stabilisatoren oder Alterungsschutzmittel, wie z.B. sterisch gehinderte Phenole oder Aminderivate eingesetzt werden, typische Mengenbereiche für diese Stabilisatoren sind 0,1 bis 5 Gew.%.

Obwohl die Rheologie der erfindungsgemäßen Zusammensetzungen normalerweise durch die Auswahl der Füllstoffe und das Mengenverhältnis der niedermolekularen Flüssigkautschuke in den gewünschten Bereich gebracht werden kann, können konventionelle Rheologiehilfsmittel wie z.B. pyrogene Kieselsäuren, Bentone oder fibrillierte oder Pulp-Kurzfasern im Bereich zwischen 0,1 und 7% zugesetzt werden. Außerdem können weitere konventionelle Hilfs- und Zusatzmittel in den erfindungsgemäßen Zusammensetzungen Verwendung finden.

Als Verstärkungsmittel für die erfindungsgemäßen mehrschichtigen Formkörper werden folien- oder faserhaltige Flächengebilde verwendet. Dabei können die Folien Metallfolien, beispielsweise Aluminiumfolien, Stahlfolien, Kupferfolien oder Messingfolien sein. Es können auch Kunststofffolien aus Polyester, Polyamid, Polypropylen oder Polyimid verwendet werden. Als faserhaltige Flächengebilde können Vliese, Gewebe oder Gewirke aus Aramidfasem, Kohlenstofffasern, Glasfasern, Polyamidfasern, Polyethylenfasem, Polypropylenfasem oder Polyesterfasern verwendet werden.

Es kann weiterhin zweckmäßig sein, daß zur effizienten Lagerhaltung und Transportfähigkeit der erfindungsgemäßen mehrschichtigen flächigen Formkörpern mindestens eine Seite der Bindemittelschicht durch eine Schutzfolie zu bedecken, wenn die Bindemittelschicht bei Raumtemperatur bzw. Lager- und Transporttemperaturen (bis etwa 50° C) Eigenklebrigkeit aufweist. Diese Schutzfolie kann dabei in herkömmlicher Weise aus (siliconisiertem) Papier oder Kunststoff bestehen, es kann jedoch auch eine Folie aus Schmelzklebstoff verwendet werden, die kurz vor der Applikation des Formkörpers erwärmt wird, wodurch sie oberflächlich klebrig wird und auf dem Formkörper verbleiben kann. Hierzu sollte der Schmelzklebstoff mit der Kautschuk-Zusammensetzung des Formkörpers verträglich sein.

Zur Herstellung der erfindungsgemäßen Formkörper wird zunächst die Bindemittel-Zusammensetzung in an sich bekannter und herkömmlicher Weise in geeigneten Mischaggregaten wie Planetenmischem, Kneter oder geeigneten Mischextrudem homogen gemischt

Anschließend wird die homogenisierte Bindemittelmischung in der vorgesehenen Schichtstärke auf das Verstärkungsmittel d.h. die Folie oder das faserhaltige Flächengebilde extrudiert und, falls wegen der Eigenklebrigkeit erforderlich, auf der Bindemittelseite - d.h. der Seite, die der Verstärkungsmittelschicht abgewandt ist - mit einer Schutzfolie versehen. Der Auftrag der Bindemittelschicht auf das Verstärkungsmittel kann dabei in herkömmlicher Weise durch Extrusion durch ein Breitschlitzdüse, ein "Doctor-Blade'' oder durch Walzauftrag erfolgen, bevorzugt ist der Auftrag durch eine Breitschlitzdüse. Der so gefertigte Formkörper kann entweder als Endlosware zu einer Spule aufgewickelt werden, oder in einzelne Formstücke zerschnitten oder gestanzt werden.

Typische Bindemittelzusammensetzungen für die Herstellung der erfindungsgemäßen Formkörper enthalten:

| | |
|---|---|
| 0-20,0 Gew. % | cis 1,4 Polybutadien, fest, |
| 3,0-20,0 Gew. % | Zinkoxid, |
| 2,0-20,0 Gew. % | Calciumoxid, |
| 0,1-2,0 Gew. % | Antioxidans, |
| 0,5-0,5 Gew. % | Pigment, vorzugsweise Ruß, |
| 5,0-60,0 Gew. % | Calciumcarbonat, gemahlen |
| 5,0-40,0 Gew. % | gefälltes Calciumcarbonat, gecoatet mit Stearat, |
| 2,0-20,0 Gew. % | Polybutadien flüssig, MW ca. 1800, cis - 1,4 ca. 75 %, |
| 1,0-30,0 Gew. % | Polybutadien mit aktiven Carboxylgruppen, MW ca. 1700, |
| 2,0-20,0 Gew. % | EPDM, MW 5700-8700, Propylengehalt 49 - 59 %, |
| 2,0-40,0 Gew. % | niedermolekulares, stereospezifisches Polybutadien-Öl, |
| 1,0-10,0 Gew. % | MW 1800, vinyl 50 %, Schwefel, |
| 0,2-5,0 Gew. % | MBTS, ggf. in Mischung mit anderen Beschleunigem, |
| 0,1-2,0 Gew. % | Mikrohohlkugeln |

wobei die Summe der Bindemittelbestandteile sich zu 100 Gew. % ergänzt.

Ein bevorzugtes Anwendungsfeld für die erfindungsgemäßen heißhärtenden, ggf. schäumbaren reaktiven Zusammensetzungen ist der sogenannte Rohbau in der Automobilindustrie. Hier sind auch die Teile, die später Hohlräume in der Karosserie bilden, gut zugänglich, so daß die Applikation der vorgeformten Schichtköper auf die zu versteifenden flächigen Bereiche der Karosserie manuell vorgenommen werden kann. Es ist auch möglich, daß die Extrusion des Bindemittels und die nachfolgende Auflage des Verstärkungsmittels auf das Bindemittel direkt auf das Substrat in der Fertigungslinie des Automobilwerkes erfolgt. Dies kann mit geeigneten automatischen Extrusionssystemen und / oder Robotern weitgehend automatisch erfolgen. Für die Härtungs- und Aufschäumreaktion der Zusammensetzungen stehen dann die Prozesstemperaturen der verschiedenen Lacköfen zur Verfügung, d.h. ein Temperaturbereich zwischen 80° C und 240° C für etwa 10 bis 35 Minuten, vorzugsweise dient der Durchlauf der Karosserie bzw. der Teile durch den sogenannten "EC-Ofen" zum Aushärten und ggf. Aufschäumen der erfindungsgemäßen Zusammensetzungen, d.h. es stehen Temperaturen zwischen 160° C und 200° C zur Verfügung.

Die erfindungsgemäßen flächigen Formkörper dienen zur Flächen- oder Rahmenversteifung für verschiedenste Anwendungen im Automobilbau beispielsweise zum Versteifen von Bereichen von Kofferraumdeckeln, Motorhauben, Türflächen, Dachflächen sowie Fahrzeugrahmen. Durch eine entsprechende Mischung aus Fest- und Flüssigkautschuken in Kombination mit der adäquaten Menge an Schwefel und Beschleunigern als Vulkanisationsmittel, oder auch der schwefelfreien Vulkanisationsmittel, werden Versteifungsleistung bis zum Faktor 6, bezogen auf das nicht versteifte Blech, erzielt und es werden Festigkeiten von bis zu 6 MPa für den Formkörper erzielt.

In den nachfolgenden Ausführungsbeispielen soll die Erfindung näher erläutert werden, wobei die Auswahl der Beispiele keine Beschränkung des Umfanges des Erfindungsgegenstandes darstellen soll, sie sollen lediglich in modellhafter Weise einzelne Ausführungsformen und vorteilhafte Wirkungen der Erfindung darstellen. Wenn nicht anders angegeben, sind alle Mengenangaben in den nachfolgenden Beispielen Gewichtsteile bzw. Gewichtsprozent.

### Beispiel 1

In einem Extruder wurden die nachfolgenden Bestandteile in herkömmlicher Weise bis zur Homogenität gemischt

| | |
|---|---|
| 3.00 Teile | Zinkoxid |
| 2,80 Teile | Calciumoxid |
| 0,55 Teile | Antioxidans (sterisch gehindertes Phenol) |
| 0,55 Teile | Russ |
| 52.3 Teile | Calciumcarbonat, gemahlen |
| 9,00 Teile | Calciumcarbonat, gefällt gecoatet mit Stearat |
| 9,00 Teile | Polybutadien flüssig, MW ca. 1800, cis- 1,4 ca. 75 % |
| 5,00 Teile | Polybutadien mit Maleinsäureanhydrid modifiziert, MW ca. 1000, cis -1,4 ca. 10 - 20 % |
| 7,60 Teile | EPDM, MW 5700 - 8700, Propylen 49 - 59 %, Dien 8 -11 % |
| 3,00 Teile | Klebrigmacher, |
| 4,80 Teile | Schwefel |
| 0,50 Teile | MBTS |
| 1,90 Teile | expandierbare Mikrohohlkugeln |

Die homogene Mischung wurde auf ein Gewebe aus Glasfaser zu einer Schichtdicke von 1,5 mm extrudiert. Anschließend wurde ein Formkörper mit den Abmessungen 25 mm x 100 mm aus diesem Schichtkörper geschnitten. Dieser wurde mit der klebrigen Bindmittelschicht auf ein Stahlblech 0,8 mm Stärke aufgedrückt und bei Temperaturen von 170 °C bzw. 200 °C für eine Zeit von 25 min bzw. 60 min einem Wärmeumluftofen ausgehärtet. An dem so versteiften Blech wurden die folgenden Messergebnisse im Drei-Punkt-Biegeversuch in Anlehnung an DIN 53293 bzw. EN 63 erzielt:

| | |
|---|---|
| Aushärtung bei 25 min 175 °C: | ca. 150 N nach 1 mm Durchbiegung |
| | ca. 190 N Maximalwert (nach ca. 6 mm Durchbiegung) |
| Aushärtung bei 60 min 200 °C: | ca. 150 N nach 1 mm Durchbiegung |
| | ca. 190 N Maximalwert (nach ca. 5 mm Durchbiegung) |
| 0,8 mm Stahlblech: | ca. 30 N nach 1 mm Durchbiegung |
| | ca. 190 N nach ca. 5 mm Durchbiegung |

## Patentansprüche

1. Mehrschichtiger, flächiger Formkörper aufgebaut aus mindestens einer hitzehärtbaren Bindemittelschicht und mindestens einer Schicht von Verstärkungsmitteln **dadurch gekennzeichnet, dass** die hitzehärtende Bindemittelschicht natürliche und / oder synthetische, olefinische Doppelbindungen enthaltende Kautschuke und Vulkanisationsmittel enthält wobei mindestens ein Kautschuk ein flüssiges Polyen aus der Gruppe bestehend aus 1,2-Polybutadien, 1,4-Polybutadien, Polyisopren, Polybuten, Polyisobutylen, Copolymere des Butadiens und/oder Isoprens mit Styrol und/oder Acrylnitril, Copolymere von Acrylsäureestem mit Dienen ist und wobei das Molekulargewicht des flüssigen Polyens im Bereich von 900 bis etwa 40000 liegt und mindestens ein Kautschuk ein Festkautschuk ist, der in einer Menge von 3 bis 20 Gew.% in der Gesamtzusammensetzung enthalten ist.

2. Formkörper nach Anspruch 1, **dadurch gekennzeichnet, dass** das oder die flüssige(n) Polyen(e) zusätzlich terminale und/oder statistisch verteilte Carboxylgruppen, Carbonsäureanhydridgruppen, Hydroxylgruppen, Aminogruppen, Mercaptogruppen oder Epoxygruppen als funktionelle Gruppen enthält.

3. Formkörper nach mindestens einem der vorhergehenden Ansprüche, **dadurch gekennzeichnet, dass** das Bindemittel mindestens einen Festkautschuk in einer Menge von 3 bis 10 Gew.%, bezogen auf die Gesamtzusammensetzung, enthält.

4. Formkörper nach mindestens einem der vorhergehenden Ansprüche, **dadurch gekennzeichnet, dass** er einen oder mehrere Festkautschuke aus der Gruppe cis-1,4-Polybutadien, Styrol-Butadien-Kautschuk, synthetischer Isoprenkautschuk, Naturkautschuk, Ethylen-Propylen-Dien-Kautschuk (EPDM), Nitritkautschuk, Butylkautschuk, Acrylkautschuk enthält.

5. Formkörper nach mindestens einem der vorhergehenden Ansprüche, **dadurch gekennzeichnet, dass** zur Härtung ein Vulkanisationssystem aus Schwefel, organischen Vulkanisationsbeschleunigem und Zinkverbindungen verwendet wird.

6. Formkörper gemäß Anspruch 5, **dadurch gekennzeichnet, daß** das Vulkanisationssystem aus 1 Gew.% bis 15 Gew.%, vorzugsweise 3 Gew.% bis 8 Gew.% pulverförmigem Schwefel, 0,1 Gew.% bis 10 Gew.%, vorzugsweise 0,2 Gew.% bis 8 Gew.% organischem Beschleuniger und 3 Gew.% bis 20 Gew.%, vorzugsweise 3 Gew.% bis 7 Gew.% Zinkverbindungen, vorzugsweise Zinkoxid besteht, wobei die Gew.% auf die Gesamtzusammensetzung bezogen sind.

7. Formkörper nach mindestens einem der vorhergehenden Ansprüche 1 bis 4, **dadurch gekennzeichnet, dass** als Vulkanisationsmittel Peroxide, polyfunktionelle Amine, Chinone, p-Benzochinondioxim, p-Nitrosobenzol und / oder Dinitrosobenzol gegebenenfalls in Kombination mit organischen und/ oder anorganischen Beschleunigern verwendet werden.

8. Formkörper nach mindestens einem der vorhergehenden Ansprüche, **dadurch gekennzeichnet, dass** sie zusätzlich Füllstoffe, Rheologiehilfsmittel, Extenderöle, Haftvermittler und/oder Alterungsschutzmittel enthalten.

9. Formkörper nach mindestens einem der vorhergehenden Ansprüche **dadurch gekennzeichnet, dass** die Bindemittelschicht bei Raumtemperatur eigenklebrig ist.

10. Formkörper nach mindestens einem der vorhergehenden Ansprüche, **dadurch gekennzeichnet, dass** das Verstärkungsmittel eine Folie oder ein faserhaltiges Flächengebilde ist.

11. Formkörper nach Anspruch 10, **dadurch gekennzeichnet, dass** die Folie eine Metallfolie ausgewählt aus Aluminium, Stahl, Kupfer oder Messing oder eine Kunststoff-Folie ausgewählt aus Polyester, Polyamid, Polypropylen oder Polyimid ist.

12. Formkörper nach Anspruch 10, **dadurch gekennzeichnet, dass** das faserhaltige Flächengebilde ein Vlies, ein Gewebe oder ein Gewirke aus Aramidfasem, Kohlenstoff-Fasern, Glasfasern, Polyamidfasem, Polyethylenfasern, Polypropylenfasern oder Polyesterfasern ist.

13. Formkörper nach mindestens einem der vorhergehenden Ansprüche, **dadurch gekennzeichnet, dass** die Bindemittelschicht zumindest auf einer Seite durch eine Schutzfolie bedeckt ist.

14. Verwendung eines Formkörpers nach mindestens einem der vorhergehenden Ansprüche zum Versteifen oder Verstärken von dünnwandigen flächigen Bauteilen aus Metall oder Kunststoff, insbesondere in der Fahrzeugindustrie.

15. Verfahren zum Versteifen oder Verstärken von flächigen Bauteilen aus Metall oder Kunststoff **gekennzeichnet durch** die folgenden wesentlichen Verfahrensschritte
a) Aufbringen einer härtbaren Bindemittelschicht nach Anspruch 1 bis 8 auf das Verstärkungsmittel.
b) ggf. Aufbringen einer Schutzfolie auf die Bindemittelschicht.
c) ggf. Zwischenlagem der Formkörper,
d) Entfernen der Schutzfolie von der Bindemittelschicht,
e) Aufbringen des Formkörpers auf das zu verstärkende oder zu versteifende Bauteil,
f) Aushärten des Bindemittels bei Temperaturen zwischen 110 °C und 210°C, vorzugsweise zwischen 130 °C und 180 °C.

## Claims

1. A multi-layered, planar shaped article built up from at least one thermosetting binder layer and at least one layer of reinforcing agents, wherein the thermosetting binder layer comprises naturally occurring and/or synthetic rubbers containing olefinic double bonds, and vulcanizing agents, at least one rubber being a liquid polyene from the group consisting of 1,2-polybutadiene, 1,4-polybutadiene, polyisoprene, polybutene, polyisobutylene, copolymers of butadiene and/or isoprene with styrene and/or acrylonitrile and copolymers of acrylic acid esters with dienes, and the molecular weight of the liquid polyene being in the range from 900 to about 40,000, and wherein at least one rubber is a solid rubber which is present in an amount of 3 to 20 wt.%, based on the total composition.

2. A shaped article as claimed in claim 1, wherein the liquid polyene(s) additionally contain(s) terminal and/or randomly distributed carboxyl groups, carboxylic acid anhydride groups, hydroxyl groups, amino groups, mercapto groups or epoxide groups as functional groups.

3. A shaped article as claimed in at least one of the preceding claims, wherein the binder comprises at least one solid rubber in an amount of 3 to 10 wt.%, based on the total composition.

4. A shaped article as claimed in at least one of the preceding claims, wherein it comprises one or more solid rubbers from the group consisting of cis-1,4-polybutadiene, styrene/butadiene rubber, synthetic isoprene rubber, natural rubber, ethylene/propylene/diene rubber (EPDM), nitrile rubber, butyl rubber and acrylic rubber.

5. A shaped article as claimed in at least one of the preceding claims, wherein a vulcanization system of sulfur, organic vulcanization accelerators and zinc compounds is used for the curing.

6. A shaped article as claimed in claim 5, wherein the vulcanization system comprises 1 wt.% to 15 wt.%, preferably 3 wt.% to 8 wt.% pulverulent sulfur, 0.1 wt.% to 10 wt.%, preferably 0.2 wt.% to 8 wt.% organic accelerator and 3 wt.% to 20 wt.%, preferably 3 wt.% to 7 wt.% zinc compounds, preferably zinc oxide, the wt.% being based on the total composition.

7. A shaped article as claimed in at least one of the preceding claims 1 to 4, wherein peroxides, polyfunctional amines, quinones, p-benzoquinonedioxime, p-nitrosobenzene and/or dinitrobenzene, optionally in combination with organic and/or inorganic accelerators, are used as vulcanizing agents.

8. A shaped article as claimed in at least one of the preceding claims, wherein they additionally comprise fillers, rheology auxiliaries, extender oils, adhesion promoters and/or anti-ageing agents.

9. A shaped article as claimed in at least one of the preceding claims, wherein the binder layer is intrinsically tacky at room temperature.

10. A shaped article as claimed in at least one of the preceding claims, wherein the reinforcing agent is a film or a fiber-containing sheet-like structure.

11. A shaped article as claimed in claim 10, wherein the film is a metal film chosen from aluminum, steel, copper or brass or a film of plastic chosen from polyester, polyamide, polypropylene or polyimide.

12. A shaped article as claimed in claim 10, wherein the fiber-containing sheet-like structure is a nonwoven, a woven fabric or a knitted fabric of aramid fibers, carbon fibers, glass fibers, polyamide fibers, polyethylene fibers, polypropylene fibers or polyester fibers.

13. A shaped article as claimed in at least one of the preceding claims, wherein the binder layer is covered by a protective film at least on one side.

14. The use of a shaped article as claimed in at least one of the preceding claims for stiffening or reinforcing thin-walled planar structural components of metal or plastic, in particular in the vehicle industry.

15. A process for stiffening or reinforcing planar structural components of metal or plastic, wherein there are the following essential process steps
a) application of a curable binder layer as claimed in claims 1 to 8 to the reinforcing agent,
b) optionally application of a protective film to the binder layer,
c) optionally intermediate storage of the shaped articles,
d) removal of the protective film from the binder layer,
e) application of the shaped article to the structural component to be reinforced or to be stiffened,
f) curing of the binder at temperatures of between 110°C and 210°C, preferably between 130°C and 180°C.

## Revendications

1. Article moulé plat à plusieurs couches constitué d'au moins une couche de liant durcissable à la chaleur et d'au moins une couche d'agents de renforcement, **caractérisé en ce que** la couche de liant durcissant à la chaleur contient des caoutchoucs naturels et/ou synthétiques présentant des doubles liaisons oléfiniques et des agents de vulcanisation, où au moins un caoutchouc est un polyène liquide du groupe constitué par le 1,2-polybutadiène, le 1,4-polybutadiène, le polyisoprène, le polybutène, le polyisobutylène, les copolymères du butadiène et/ou de l'isoprène avec le styrène et/ou l'acrylonitrile, les copolymères des esters d'acide acrylique avec des diènes, et où le poids moléculaire du polyène liquide se situe dans un intervalle allant d'environ 900 à environ 40 000, et au moins un caoutchouc est un caoutchouc solide qui est contenu en une quantité de 3 à 20 % en poids dans l'ensemble de la composition.

2. Article moulé selon la revendication 1, **caractérisé en ce que** le ou les polyènes liquides contiennent en outre des groupes carboxyle, des groupes anhydride d'acide carboxylique, des groupes hydroxyle, des groupes amino, des groupes mercapto ou des groupes époxy à répartition terminale et/ou statistique comme groupes fonctionnels.

3. Article moulé selon au moins une des revendications précédentes, **caractérisé en ce que** le liant contient au moins un caoutchouc solide en une quantité de 3 à 10 % en poids, par rapport à l'ensemble de la composition.

4. Article moulé selon au moins une des revendications précédentes, **caractérisé en ce qu'**il contient un ou plusieurs caoutchoucs solides du groupe du cis-1,4-polybutadiène, du caoutchouc styrène-butadiène, du caoutchouc d'isoprène synthétique, du caoutchouc naturel, du caoutchouc éthylène-propylène-diène (EPDM), du caoutchouc nitrile, du caoutchouc butyle, du caoutchouc acrylique.

5. Article moulé selon au moins une des revendications précédentes, **caractérisé en ce qu'**on utilise pour le durcissement un système de vulcanisation constitué de soufre, d'accélérateurs de vulcanisation organiques et de composés de zinc.

6. Article moulé selon la revendication 5, **caractérisé en ce que** le système de vulcanisation est constitué de 1 % en poids à 15 % en poids, de préférence de 3 % en poids à 8 % en poids de soufre pulvérulent, de 0,1 % en poids à 10 % en poids, de préférence de 0,2 % en poids à 8 % en poids d'accélérateurs organiques et de 3 % en poids à 20 % en poids, de préférence de 3 % en poids à 7 % en poids de composés de zinc, de préférence d'oxyde de zinc, les pourcentages en poids se rapportant à l'ensemble de la composition.

7. Article moulé selon au moins une des revendications 1 à 4 précédentes, **caractérisé en ce qu'**on utilise comme agents de vulcanisation des peroxydes, des amines polyfonctionnelles, des quinones, du dioxime de p-benzoquinone, du p-nitrosobenzène et/ou du dinitrosobenzène, le cas échéant en combinaison avec des accélérateurs organiques et/ou inorganiques.

8. Articles moulés selon au moins une des revendications précédentes, **caractérisés en ce qu'**ils contiennent en outre des charges, des adjuvants de rhéologie, des huiles diluantes, des adhésiphores et/ou des agents de protection contre le vieillissement.

9. Article moulé selon au moins une des revendications précédentes, **caractérisé en ce que** la couche de liant est adhésive par elle-même à la température ambiante.

10. Article moulé selon au moins une des revendications précédentes, **caractérisé en ce que** l'agent de renforcement est une feuille ou un article en nappe contenant des fibres.

11. Article moulé selon la revendication 10, **caractérisé en ce que** la feuille est une feuille de métal choisi parmi l'aluminium, l'acier, le cuivre ou le laiton, ou une feuille de matière synthétique choisie parmi le polyester, le polyamide, le polypropylène ou le polyimide.

12. Article moulé selon la revendication 10, **caractérisé en ce que** l'article en nappe contenant des fibres est un non-tissé, un tissu ou un article maillé constitué de fibres d'aramide, de fibres de carbone, de fibres de verre, de fibres de polyamide, de fibres de polyéthylène, de fibres de polypropylène ou de fibres de polyester.

13. Article moulé selon au moins une des revendications précédentes, **caractérisé en ce que** la couche de liant est recouverte au moins sur un côté par une feuille protectrice.

14. Utilisation d'un article moulé selon au moins une des revendications précédentes pour rigidifier ou renforcer des pièces plates à paroi mince de métal ou de matière plastique, en particulier dans l'industrie automobile.

15. Procédé pour rigidifier ou renforcer des pièces plates de métal ou de matière synthétique, **caractérisé par** les étapes opératoires essentielles suivantes :
a) dépôt d'une couche de liant durcissable selon les revendications 1 à 8 sur l'agent de renforcement,
b) le cas échéant dépôt d'une feuille protectrice sur la couche de liant,
c) le cas échéant entreposage des articles moulés,
d) retrait de la feuille protectrice de la couche de liant,
e) apport de l'article moulé sur la pièce à renforcer ou à rigidifier,
f) durcissement du liant à des températures comprises entre 110 °C et 210°C, de préférence entre 130°C et 180°C.
